# EUROPÄISCHE PATENTSCHRIFT

(11) **EP 2 918 520 B1**
(45) Veröffentlichungstag und Bekanntmachung des Hinweises auf die Patenterteilung: **12.10.2016**
(21) Anmeldenummer: 15157077.7
(22) Anmeldetag: 02.03.2015
(51) Int. Cl.: B65G 19/02, B65G 47/61

(54) **Verfahren und Einrichtung zur Abgabe von Stückgütern von einer Fördervorrichtung**
Method and device for discharge of piece goods from a conveying device
Procédé et dispositif de distribution de marchandises au détail à partir d'un dispositif de transport

(30) Priorität: 11.03.2014 CH 3642014
(43) Veröffentlichungstag der Anmeldung: 16.09.2015
(73) Patentinhaber: Ferag AG, 8340 Hinwil (CH)
(72) Erfinder: Fenile, Roberto, 8623 Wetzikon (CH); Bonadimann, Christian, 8623 Wetzikon (CH)
(74) Vertreter: Frei Patent Attorneys

(56) Entgegenhaltungen:
- EP-A1- 0 633 212
- EP-A2- 2 196 415
- CH-A- 166 046
- GB-A- 2 243 816

## Beschreibung

Die Erfindung bezieht sich auf das Gebiet der Fördertechnik und betrifft eine Fördervorrichtung nach dem Oberbegriff des Anspruchs 1.

Fördereinrichtungen mit schienengeführten Förderwagen, welche über Laufrollen oder Gleitelementen entlang von Führungsschienen unabhängig voneinander geführt werden, sind aus dem Stand der Technik bekannt. Derartige Fördereinrichtungen werden z. B. als Schwerkraftförderer ausgestaltet. Bei diesen Einrichtungen werden die Förderwagen über Mitnehmer auf ein höheres Potentialniveau bewegt, von wo aus sich diese mittels Schwerkraft entlang der Führungsschiene in Richtung eines tieferen Potentialniveaus bewegen. Der Begriff "Potentialniveau" bezieht sich auf die potentielle Energie der Förderwagen im Gravitationsfeld.

Bei der Förderung von einem tieferen auf ein höheres Potentialniveau weist die Förderbahn bzw. die Führungsschiene entsprechend eine Steigung auf. Bei der Förderung von einem höheren auf ein tieferes Potentialniveau weist die Förderbahn bzw. die Führungsschiene entsprechend ein Gefälle auf.

An die Förderwagen sind jeweils Halteorgane gekoppelt, welche die zu fördernden Stückgüter aufnehmen und halten. Die Stückgüter werden so mittels den Förderwagen entlang einer durch die Führungsschiene vorgegebene Förderstrecke gefördert. Die genannten Fördereinrichtungen weisen den Vorteil auf, dass die Förderwagen einzeln, d.h. unabhängig voneinander entlang einer Förderstrecke bewegt werden können. Dies erlaubt zum Beispiel eine Pufferung von mit Stückgütern besetzten Förderwagen entlang der Förderstrecke.

Die EP 0856 480 B1 beschreibt eine Fördereinrichtung mit einer Mehrzahl von schienengeführten Förderwagen. Die Förderwagen umfassen Laufrollen. Der Grundkörper des Förderwagens weist zwei Schenkel auf. An den einander zugeordneten Seiten der Wagenschenkel sind je zwei kreuzweise gegengleich versetzt angeordnete Laufrollen befestigt. Die Laufrollen sind in Verlaufrichtung der Wagenschenkel derart gegenseitig beabstandet angeordnet, dass eine flache Führungsschiene zwischen den Laufrollen Platz findet. Die Laufrollen rollen auf den beiden einander gegenüber liegenden Flachseiten der Laufschiene ab.

Die EP 1 169 249 B1 beschreibt ein Verfahren und eine Vorrichtung zur Stückgutförderung. Die Stückgüter werden auf Haltemittel geladen, von diesen gehalten gefördert und von diesen wieder entladen. Die Stückgüter werden zum Be- oder Entladen der Haltemittel quer zur Förderrichtung in die Haltemittel oder aus den Haltemitteln geschoben. Die Schiebebewegung erfolgt parallel zur Längsachse der Stückgüter über eine Gegenstandsführung.

Die Veröffentlichungsschrift EP 0 633 212 A1 beschreibt eine Fördervorrichtung nach dem Oberbegriff des Anspruchs 1, eine Stückgut-Transportvorrichtung mit individuellen Transportwagen, an welchen jeweils ein steuerbarer Greifer angeordnet ist. Die Transportvorrichtung bildet einen Übergabebereich aus, in welchem Stückgüter an einen Wegförderer übergeben werden können.

Die Veröffentlichungsschrift GB 2 243 816 A beschreibt einen Schwerkraftförderer zum hängenden Transport von Wäschestücken in einer Wäscherei. Die Wäschestücke werden mittels Transportwagen, an welchen jeweils eine Halteklammer angeordnet ist, transportiert.

Entlang der Förderstrecke einer Fördervorrichtung werden oftmals Bearbeitungsschritte durchgeführt, welche eine geführte Bewegung der Förderwagen erfordern. Ein solcher Bearbeitungsschritt ist beispielsweise die Abgabe der Stückgüter an eine Übernahmeeinrichtung. So müssen die Förderwagen geführt und voneinander beabstandet der Abgabeeinrichtung zugeführt werden. Nur so ist eine kontrollierte Abgabe der Stückgüter von den Förderwagen an die Übernahmeeinrichtung möglich. Es ist daher eine Aufgabe der vorliegenden Erfindung, eine Fördervorrichtung mit einer Bearbeitungseinrichtung, insbesondere einer Abgabeeinrichtung, vorzuschlagen, welche die Zuführung der Förderwagen mit einer kontrollierten Geschwindigkeit in die Bearbeitungseinrichtung erlaubt.

Gemäss einer weiteren Aufgabe soll die Fördervorrichtung insbesondere die Zuführung der Förderwagen in definierten Abständen und mit definierter Geschwindigkeit zwecks Bearbeitung, insbesondere Abgabe von Stückgütern in der Bearbeitungs- bzw. Abgabeeinrichtung ermöglichen.

Es ist ferner eine weitere Aufgabe der vorliegenden Erfindung, möglichst bestehende Einrichtungen der Fördervorrichtung zu nutzen, um die Förderwagen mit kontrollierter Geschwindigkeit in die Bearbeitungseinrichtung zu führen. Das heisst, bestehende Einrichtungen, welche ohnehin benötigt werden, sollen eine weitere Funktion erhalten.

Eine weitere Aufgabe der vorliegenden Erfindung besteht ferner darin, Mittel zum Entlassen der Stückgüter aus den Halteorganen der Förderwagen vorzuschlagen.

Wenigstens eine der Aufgaben wird durch eine Fördervorrichtung nach Anspruch 1 gelöst.

Die Bewegungsbahn der Förderwagen und Mitnehmer verläuft insbesondere im Einlaufbereich entlang eines Gefälles.

Der Begriff "Gefälle" bedeutet, dass die Bewegungsbahn eine Richtungskomponente und die entlang der Bewegungsbahn bewegten Förderwagen bzw. Mitnehmer eine Bewegungskomponente in Schwerkraftrichtung aufweisen. Das Gefälle kann geneigt, kurvenförmig oder senkrecht sein.

Die Förderwagen bewegen sich zum Einlaufbereich hin und im Einlaufbereich insbesondere mittels Schwerkraftunterstützung.

Rückhaltekontakt bedeutet, dass der Mitnehmer den Förderwagen über den Rückhaltekontakt zurückhält bzw. bremst. Das heisst, der Förderwagen wird daran gehindert, sich mit einer höheren, durch die Schwerkraftwirkung vorgegebenen Geschwindigkeit in den Einlaufbereich zu bewegen.

Steigung bedeutet, dass die Bewegungsbahn eine Richtungskomponente und die entlang der Bewegungsbahn bewegten Förderwagen bzw. Mitnehmer eine Bewegungskomponente entgegen der Schwerkraftrichtung aufweisen. Die Steigung kann geneigt, kurvenförmig oder senkrecht sein.

Mitnahmekontakt bedeutet, dass der Mitnehmer den Förderwagen über den Mitnahmekontakt, insbesondere entgegen der Schwerkraftwirkung, antreibt.

Die Förderwagen und die Mitnehmer sind insbesondere zum Einlaufbereich hin entlang einer gleich verlaufenden Bewegungsbahn bewegbar.

Die Förderwagen und die Mitnehmer sind insbesondere im Einlaufbereich entlang einer gleich verlaufenden Bewegungsbahn bewegbar.

Die Förderwagen und die Mitnehmer sind insbesondere im Bearbeitungsbereich entlang einer gleich verlaufenden Bewegungsbahn bewegbar.

Die Förderwagen und die Mitnehmer sind insbesondere im Auslaufbereich entlang einer gleich verlaufenden Bewegungsbahn bewegbar.

Die gleich verlaufende Bewegungsbahn kann eine parallel verlaufende Bewegungsbahn sein.

Die Förderwagen sind insbesondere voneinander unabhängig entlang einer Bewegungsbahn bewegbar ausgebildet.

Die Förderwagen sind insbesondere nicht miteinander verkettbar ausgebildet.

Die Förderwagen enthalten Halteorgane zur Aufnahme und Halterung von Stückgütern.

Die Halteorgane können Halteklammern zum klemmenden, temporären Haltern der Stückgüter sein.

Die erfindungsgemässe Fördervorrichtung kann eine mit Schwerkraft betriebene Förderung beinhalten. Bei solchen Vorrichtungen werden die Förderwagen von einem höheren Potentialniveau von der Schwerkraft angetrieben entlang einer Bewegungsbahn mit Gefälle auf ein tieferes Potentialniveau bewegt.

Die Förderwagen können hierzu vorgängig über angetriebene Mitnehmer, ähnlich einer Aufstiegshilfe, entlang einer Bewegungsbahn mit Steigung von einem tieferen auf ein höheres Potentialniveau bewegt werden.

Die Aufgabe wird auch durch ein Verfahren nach Anspruch 11 erzielt.

Der Rückhalte- und Mitnahmekontakt wird jeweils insbesondere über Kontaktelemente am Förderwagen hergestellt.

Die Mitnehmer werden insbesondere unabhängig von der Schwerkraft angetrieben. Die Mitnehmer werden insbesondere durch den Mitnehmer-Antrieb gesteuert angetrieben.

Die Mitnehmer weisen insbesondere eine durch eine Steuerungseinrichtung vorgegebene Geschwindigkeit auf.

Der Bearbeitungsschritt kann ein beliebiger Verfahrensschritt am Stückgut sein, wie Adressieren des Stückgutes oder Wägen des Stückgutes.

Die Förderwagen, welche im Anschluss an den Abgabebereich keine Stückgüter mehr fördern, werden im Auslaufbereich durch die Mitnehmer insbesondere entgegen der Schwerkraftrichtung entlang einer Steigung bewegt.

Die Förderwagen werden im Einlaufbereich, im Abgabebereich und im Auslaufbereich entlang einer Bewegungsbahn, insbesondere entlang einer kurvenförmigen Bewegungsbahn, von einem höheren Potentialniveau im Einlaufbereich auf ein tieferes Potentialniveau im Abgabebereich und vom tieferen Potentialniveau im Abgabebereich auf ein höheres Potentialniveau im Anschluss an den Abgabebereich, insbesondere im Auslaufbereich, bewegt.

Eine Weiterbildung des Verfahrens zeichnet sich insbesondere dadurch aus, dass
- Mitnehmer nachlaufende Förderwagen unter Ausbildung eines Rückhaltekontaktes mit der Mitnehmergeschwindigkeit geführt in den Einlaufbereich bewegen;
- die Förderwagen im Einlaufbereich unter Ausbildung eines Führungskontaktes mit Entlassungsorganen zusammengeführt werden;
- die Entlassungsorgane die Förderwagen über den Führungskontakt mit der Geschwindigkeit der Entlassungsorgane geführt in den Abgabebereich bewegen;
- die Mitnehmer sich schneller bewegen als die Entlassungsorgane, so dass sich die Mitnehmer im Einlaufbereich unter Beendigung des Rückhaltekontaktes in Bewegungsrichtung jeweils vom nachlaufenden Förderwagen weg bewegen;
- die Mitnehmer sich unter Ausbildung eines Mitnahmekontaktes jeweils zum vorlaufenden Förderwagen hin bewegen;
- die Förderwagen im Anschluss an den Abgabebereich über den Mitnahmekontakt durch die Mitnehmer mit Mitnehmergeschwindigkeit geführt weiterbewegt werden.

Die Abgabeeinrichtung enthält insbesondere eine Mehrzahl, entlang einer geschlossenen Bewegungsbahn bewegbarer Entlassungsorgane. Die Bewegungsbahn der Entlassungsorgane ist insbesondere eine geschlossene Umlaufbahn.

Die Entlassungsorgane dienen unter anderem zum Entlassen der Stückgüter aus den Halteorganen. Die Entlassungsorgane sind insbesondere als Ausstossorgane ausgebildet. Die Ausstossorgane dienen unter anderem dem Ausstossen der Stückgüter aus den Halteorganen.

Der Einlaufbereich definiert insbesondere jene Bewegungsstrecke bis zum Abgabebereich, in welcher die Entlassungsorgane mit den Mitnehmern und den Förderwagen zusammentreffen und entlang einer gleich verlaufenden, insbesondere gemeinsamen, Bewegungsbahn in Richtung Abgabebereich bewegt werden.

Der Auslaufbereich definiert insbesondere jene Bewegungsstrecke im Anschluss an den Abgabebereich, in welcher die Entlassungsorgane mit den Mitnehmern und den Förderwagen entlang einer gleich verlaufenden, insbesondere gemeinsamen, Bewegungsbahn vom Auslaufbereich weg bewegt werden. Das Ende des Auslaufbereichs wird insbesondere durch das Auseinanderbewegen von Ausstossorgan und Förderwagen definiert.

Gemäss einer Weiterbildung der Erfindung sind die Entlassungsorgane mit den Förderwagen und den Mitnehmern entlang einer gleich verlaufenden Bewegungsbahn durch den Einlaufbereich, den Abgabebereich und den Auslaufbereich bewegbar.

Das Entlassungsorgan enthält insbesondere einen Kontaktkörper zur Herstellung eines Führungskontaktes mit dem Förderwagen oder einem von diesem gehaltenen Stückgut zur geführten Bewegung des Förderwagens mit der Geschwindigkeit des Entlassungsorgans in den Abgabebereich.

Das Entlassungselement ist insbesondere im Einlaufbereich derart mit dem Förderwagen zusammenführbar, dass das vom Förderwagen gehaltene Stückgut in der Aufnahme des Entlassungselements positioniert wird.

Das Entlassungselement übergreift das Stückgut quer zur Bewegungsrichtung betrachtet seitlich. Das Übergreifen geschieht insbesondere ausserhalb des Einflussbereichs des Halteorgans, d.h. in Bewegungsrichtung betrachtet seitlich vom Halteorgan.

Durch das seitliche Übergreifen des Stückguts bildet das Entlassungselement eine Rückhalte- und Mitnahmeführung für das Stückgut und entsprechend auch für den Förderwagen aus.

So wird das Stückgut mit dem Förderwagen im Einlaufbereich ab den Zeitpunkt, wenn der Mitnehmer dem nachlaufenden Förderwagen enteilt, durch das Entlassungselement zurückgehalten und mit der Geschwindigkeit des Entlassungsorgans in den Abgabebereich bewegt.

Die Abgabeeinrichtung enthält insbesondere Antriebsmittel zum Antreiben der Entlassungsorgane.

Gemäss einer Weiterbildung der Erfindung enthält die Abgabeeinrichtung ein um eine Drehachse antreibbares Entlassungsradmodul. Die Entlassungsorgane sind am Entlassungsradmodul insbesondere um dessen Drehachse angeordnet.

Bei einer taktgesteuerten Übernahme der Stückgüter durch die Übernahmeeinrichtung ist die Bewegung der Entlassungsorgane im Abgabebereich insbesondere taktsynchron mit dem Übernahmetakt der Übernahmeeinrichtung.

Die Abgabeeinrichtung kann eine stationäre Steuerkulisse zur Aktivierung des Entlassungsorgans bzw. des Entlassungsgliedes des Entlassungsorgans enthalten.

Die Steuerkulisse ist insbesondere als Kurvenscheibe ausgebildet.

Die stationäre Steuerkulisse ist insbesondere im Abgabebereich angeordnet.

Die Steuerkulisse kann insbesondere mechanisch bewegt werden und dadurch zuschaltbar oder wegschaltbar sein. Dadurch kann die Steuerkulisse je nach Schaltzustand auf die Entlassungsorgane bzw. auf die Entlassungsglieder einwirken und die Abgabe von Stückgütern auslösen oder nicht.

Hierzu kann die Steuerkulisse im Abgabebereich über eine Gelenkverbindung schwenkbar angeordnet sein. Die Steuerkulisse ist insbesondere schwenkbar an einem stationären Bauteil, wie Tragkörper, der Abgabeeinrichtung befestigt.

Die Steuerkulisse ist insbesondere über den Hub eines mit dieser gelenkig verbundenen Stellzylinders zwischen einer aktiven oder inaktiven Position schwenkbar.

Der Stellzylinder kann ein Hydraulik- oder Pneumatikzylinder sein.

Der Stellzylinder ist insbesondere an einem stationären Bauteil, wie Tragkörper, der Abgabeeinrichtung angebracht.

Am Entlassungsglied kann ein Steuerelement angeordnet sein, welches mit der Steuerkulisse kooperiert, und über welches eine Entlassungsbewegung ausgelöst wird.

Das Steuerelement des Entlassungsorgans kann z. B. entlang der kurvenförmigen Führungsfläche einer als Kurvenscheibe ausgebildeten Steuerkulisse abrollen oder über diese hinweg gleiten.

Durch die Entlassungsbewegung des Entlassungsgliedes wird vom Entlassungsglied eine Entlassungskraft auf das Stückgut im Halteorgan ausgeübt.

Ist das Entlassungsglied ein Ausstossglied, so kann dieses zum geführten Ausstossen des Stückgutes aus dem Halteorgan einen in einer Führungsbuchse des Entlassungsorgans gleitend geführten Führungszylinder enthalten.

Im Weiteren kann ein Rückstellorgan vorgesehen sein, welches auf das Entlassungsglied eine der Entlassungsbewegung entgegen gesetzte Rückstellbewegung, insbesondere ausserhalb des Einflussbereichs der Steuerkulisse, ausübt.

Das Entlassungsglied eines auf einem Entlassungsradmodul angeordneten Entlassungsorgans kann durch eine kulissengesteuerte Bewegung radial nach aussen eine Entlassungskraft, insbesondere eine Ausstosskraft, auf das Stückgut ausüben.

Ein Rückstellorgan übt gemäss dieser Ausführungsform auf das Entlassungsglied entsprechend eine radial nach innen wirkende Rückstellkraft aus.

Der Abgabebereich definiert insbesondere jene Förderstrecke bis und mit der Entlassung des Stückgutes, entlang welcher das Entlassungsglied im Einflussbereich der Steuerkulisse einen Ausstosshub auf das Stückgut ausübt.

Das Entlassungsradmodul ist insbesondere derart angetrieben, dass sich die Entlassungsorgane mit einer geringeren Geschwindigkeit entlang der gleich verlaufenden Bewegungsbahn durch den Einlauf-, Abgabe- und Auslaufbereich bewegen als die Mitnehmer.

Ferner sind die Anordnung und Bewegung der Entlassungsorgane und Mitnehmer so aufeinander abgestimmt, dass ein Entlassungsorgan zu Beginn des Einlaufbereichs jeweils derart auf ein von einem Mitnehmer zurückgehaltenen Förderwagen trifft, dass das Entlassungselement mit seiner Aufnahme das im Förderwagen mitbewegte Stückgut übergreift.

Die Mitnahmeeinrichtung enthält insbesondere ein durch den Mitnehmer-Antrieb umlaufend angetriebenes, längliches, flexibles Antriebsorgan. Die Mitnehmer sind insbesondere am Antriebsorgan angebracht bzw. befestigt.

Die Mitnehmer sind insbesondere in definierten Abständen zueinander am Antriebsorgan angebracht. Diese Abstände können gleichmässig sein.

Das Antriebsorgan ist insbesondere endlos ausgebildet.

Das Antriebsorgan kann z. B. eine Kette, ein Riemen, wie Zahnriemen, ein Seil, ein Band oder ein Gurt sein.

Die Mitnehmer bilden insbesondere ein Kontaktelement, wie z. B. einen Mitnehmerfinger, aus.

Das Kontaktelement bildet insbesondere eine erste Kontaktzone zur Ausbildung eines Mitnahmekontaktes mit dem Förderwagen aus.

Das Kontaktelement bildet insbesondere eine zweite Kontaktzone zur Ausbildung eines Rückhaltekontaktes mit dem Förderwagen aus.

Die Kontaktszone kann eine Kontaktfläche, ein Kontaktpunkt oder eine Kontaktlinie sein.

Durch die Ausübung einer Aufliegekraft durch den Förderwagen auf den Mitnehmer bzw. durch die Ausübung einer Mitnahmekraft durch den Mitnehmer auf den Förderwagen, wirken Hebelkräfte auf den Mitnehmerfinger.

Ist das Antriebsorgan flexibel ausgebildet, so gibt dieses durch eine Ausweichbewegung den Hebelkräften nach und der Mitnehmerfinger kippt weg. Durch das Wegkippen des Mitnehmerfingers kann der Förderwagen vom Mitnehmerfinger abgleiten, so dass der Führungskontakt verloren geht.

Deshalb kann das flexible Antriebsorgan vor dem Einlaufbereich in einer Führungseinrichtung geführt.

Das flexible Antriebsorgan kann auch im Anschluss an den Auslaufbereich in einer Führungseinrichtung geführt sein.

Im Einlaufbereich, Abgabebereich und Auslaufbereich wird das flexible Antriebsorgan insbesondere durch ein Antriebsrad geführt, um welches das flexible Antriebsorgan geführt ist.

Die Führungseinrichtung kann z. B. einen Führungskanal für das Antriebsorgan ausbilden.

Die Führungseinrichtung kann aus Kunststoff sein.

Die Führungseinrichtung kann als Führungsschiene mit Führungskanal ausgebildet sein.

Durch die Führung des Antriebsorgans in der Führungseinrichtung wird ein Ausweichen des Antriebsorgans und somit ein Wegkippen des Mitnehmerfingers verhindert.

Die Halteklammer des Förderwagens weist mindestens zwei Klammerschenkel zum klemmenden Halten des Stückgutes auf. Wenigstens ein Klammerschenkel, vorzugsweise beide Klammerschenkel sind beweglich.

Die Stückgüter können insbesondere durch Spreizen der Klammerschenkel in die Halteklammer eingeführt oder aus dieser herausgeführt werden.

Das Spreizen der Klammerschenkel kann durch das in die Halteklammer gedrückte oder aus dieser ausgestossene Stückgut ausgelöst werden.

Die Halteklammer schliessen sich insbesondere durch auf diese wirkenden Rückstellkräfte wieder.

Die Halteklammer und/oder die Klammerschenkel sind insbesondere federelastisch ausgebildet. Die Halteklammer und/oder die Klammerschenkel können aus Federstahl sein oder Elemente aus Federstahl enthalten.

Die Halteklammer kann auch Tragbügel klemmend aufnehmen, an welchen wiederum Stückgüter hängend gefördert werden. Die Stückgüter können in die Tragbügel eingehängt sein.

Die Stückgüter sind zum Beispiel längliche Körper mit einer Längsachse.

Die Stückgüter sind insbesondere starr.

Die Stückgüter weisen insbesondere eine rotationssymmetrische Form auf.

Die rotationssymmetrische Form kann eine zylindrische Form, wie kreiszylindrische Form, sein.

Das Stückgut kann konische Abschnitte aufweisen oder vollständig konisch sein.

Die Stückgüter können zum Beispiel Vorformlinge, Kartuschen, Gläser, Flaschen, Büchsen, Lebensmittel, wie Würste, Kartonverpackungen, wie Kekskartons, Stangenware, wie Bonbons, Tuben oder Zigarren sein. Die Stückgüter können jeweils auch eine Mehrzahl von Einzelgütern sein, welche zum Beispiel in einem gemeinsamen Gebinde, wie Tasche, zusammengefasst sind, insbesondere zu einer Kollektion zusammengefasst sind.

Die Bewegungsbahn der Förderwagen in der Fördervorrichtung ist insbesondere eine geschlossene Umlaufbahn. Die Fördervorrichtung ist entsprechend als Rundlauf ausgebildet.

Die geschlossene Umlaufbahn kann jedoch durchaus Verzweigungen, wie Weichen, enthalten, welche es erlauben, die Förderwagen über unterschiedliche Förderstrecken zu bewegen.

Die Bewegungsbahn der Förderwagen kann im Bereich der Abgabeeinrichtung einen gekrümmten Verlauf, insbesondere eine Kurvenbahn, aufweisen.

Die Bewegungsbahn kann in Bewegungsrichtung der Förderwagen von einem höheren Potentialniveau im Einlaufbereich auf ein tieferes Potentialniveau im Abgabebereich verlaufen.

Die Bewegungsbahn kann in Bewegungsrichtung der Förderwagen von einem tieferen Potentialniveau im Abgabebereich auf ein höheres Potentialniveau im Auslaufbereich verlaufen.

Die Förderwagen werden in der Abgabeeinrichtung entsprechend entlang der gekrümmten Bewegungsbahn unter Schwerkrafteinfluss von einem höheren Potentialniveau im Einlaufbereich auf ein tieferes Potentialniveau im Abgabebereich bewegt.

Die Förderwagen und die Mitnehmer werden insbesondere entlang einer gleich laufenden Bewegungsbahn zum Einlaufbereich bewegt.

Die Förderwagen werden dabei über ihre Kontaktelemente jeweils von vorlaufenden Mitnehmern unter Ausbildung eines Rückhaltekontaktes zurück gehalten und synchron mit den Mitnehmern zum Einlaufbereich bewegt. Die Mitnehmer führen die Förderwagen folglich mit kontrollierter Geschwindigkeit zum Einlaufbereich.

Die Entlassungsorgane werden ebenfalls zum Einlaufbereich bewegt. Die einzelnen Entlassungsorgane treffen zu Beginn des Einlaufbereichs jeweils taktsynchron mit einem Mitnehmer und folglich mit einem von diesem synchron mitgeführten Förderwagen zusammen. Entlassungsorgane und Förderwagen werden so unter Ausbildung des Führungskontaktes paarweise zusammengeführt.

Der Führungskontakt wird insbesondere jeweils zwischen Stückgut und Entlassungsorgan ausgebildet.

So kann das Entlassungselement wie bereits erwähnt mit seiner Ausnehmung das Stückgut seitlich übergreifen und so eine Rückhalte- und Mitnahmeführung für das Stückgut und daher indirekt auch für den dazugehörigen Förderwagen ausbilden.

Die Entlassungsorgane führen nun die Förderwagen jeweils über den Führungskontakt in den Abgabebereich. Die Entlassungsorgane und Förderwagen bewegen sich dabei jeweils paarweise synchron zum Abgabebereich hin.

Die Mitnehmer bewegen sich entlang der gemeinsamen Bewegungsbahn schneller als die Entlassungsorgane und die von diesen geführten Förderwagen.

Folglich bewegen sich die schneller bewegenden Mitnehmer in Bewegungsrichtung jeweils unter Beendigung des Rückhaltekontaktes vom nachlaufenden Förderwagen weg.

Die Mitnehmer bewegen sich wie weiter unten näher beschirieben zu einem vorlaufenden Förderwagen hin. Sobald die Mitnehmer auf das Kontaktelement des vorlaufenden Förderwagens auftreffen, bilden diese mit dem Kontaktelement einen Mitnahmekontakt aus.

Der Förderwagen erreicht insbesondere im Abgabebereich das tiefste Potentialniveau in der Abgabeeinrichtung. Die Bewegungsbahn führt im Auslaufbereich ausgehend vom tiefsten Potentialniveau wieder auf ein höheres Potentialniveau.

Das Stückgut kann im Abgabebereich durch das Entlassungsorgan vom Förderwagen an die Übernahmeeinrichtung abgegeben werden.

Der leere Förderwagen wird nun nach Abgabe des Stückgutes nicht mehr durch das Entlassungsorgan geführt, da der entsprechende Führungskontakt über das Stückgut fehlt.

Der Förderwagen verweilt vielmehr im Abgabebereich bis ein in Bewegungsrichtung aufholender Mitnehmer einen Mitnahmekontakt mit dem Kontaktelement des Förderwagens ausbildet.

Der Förderwagen wird durch den Mitnehmer mitgenommen und durch diesen Auslaufbereich, welcher an den Abgabebereich anschliesst, vom Mitnehmer mitgenommen bzw. angetrieben und vom tieferen Potentialniveau im Abgabebereich auf ein höheres Potentialniveau bewegt. Der Förderwagen wird entsprechend mit der Geschwindigkeit des Mitnehmers bewegt.

Das Entlassungsorgan wird im Anschluss an den Abgabebereich aus dem Auslaufbereich heraus wieder zum Einlaufbereich hin bewegt.

Für den Fall, dass ein Stückgut nicht abgeben wird und vom Förderwagen in den Auslaufbereich bewegt wird, verbleibt der Förderwagen über das Stückgut im Führungskontakt mit dem Entlassungsorgan. Entsprechend wird der Förderwagen mit der Geschwindigkeit des Entlassungsorgans und in Paarung mit diesem im Auslaufbereich bewegt.

Die Anordnung und Bewegung der Entlassungsorgane und Mitnehmer ist nun so aufeinander abgestimmt, dass der Mitnehmer den vorlaufenden, durch das Entlassungsorgan im Auslaufbereich geführte Förderwagen unter Ausbildung eines Mitnahmekontaktes einholt, wenn das Entlassungsorgan sich unter Beenden des Führungskontaktes mit dem Stückgut aus dem Auslaufbereich heraus bewegt,

Beim Herausbewegen des Entlassungsorgans aus dem Auslaufbereich wird insbesondere der Übergriff des Entlassungselements mit dem Stückgut und somit die Führung aufgehoben.

Die Bewegungsbahn der Förderwagen kann durch eine Führungsschiene festgelegt werden, entlang welcher sich die Förderwagen bewegen.

Die Führungsschiene verläuft insbesondere entlang des Einlauf-, Abgabe- und Auslaufbereichs durch die Abgabeeinrichtung.

Die Führungsschiene kann ein Rundprofil oder Mehrkantprofil, wie Sechskantprofil sein.

Die Führungsschiene kann aus Metall, wie Stahl oder Aluminium, oder aus Kunststoff sein.

Die Führungsschiene ist insbesondere über Halterungsmittel mit einer an dieser Stelle nicht näher erläuterten Tragstruktur verbunden.

Die Führungsschiene bildet insbesondere an ihrem Aussenumfang Laufflächen bzw. Gleitflächen für den Förderwagen aus.

Rollt bzw. gleitet der Förderwagen auf einer Lauf- bzw. Gleitfläche am Aussenumfang der Führungsschiene, so wird der Förderwagen als Aussenläufer bezeichnet.

Die Förderwagen enthalten insbesondere Laufrollen zum Abrollen entlang der Führungsschiene.

Die Förderwagen können auch Gleitelemente zum Gleiten entlang der Führungsschiene enthalten.

Die Förderwagen enthalten wie erwähnt Kontaktelemente zur Herstellung eines Führungskontaktes mit dem Mitnehmer.

Die Kontaktelemente bilden z. B. jeweils eine erste Kontaktzone zur Herstellung eines Rückhaltekontaktes aus.

Der Rückhaltekontakt zeichnet sich dadurch aus, dass das Kontaktelement des Förderwagens und somit auch der Förderwagen gegenüber dem Kontaktelement des Mitnehmers nachlaufend ist.

Die Kontaktelemente bilden z. B. jeweils eine zweite Kontaktzone zur Herstellung eines Mitnahmekontaktes aus.

Der Mitnahmekontakt zeichnet sich dadurch aus, dass das Kontaktelement des Förderwagens und somit der Förderwagen gegenüber dem Kontaktelement des Mitnehmers vorlaufend ist.

Ein Kontaktelement am Förderwagen kann sowohl eine erste Kontaktzone für den Rückhaltekontakt als auch eine zweite Kontaktzone für den Mitnahmekontakt ausbilden.

Das Kontaktelement kann insbesondere ein Kontaktstift, ein Kontaktnocken, ein Kontaktzapfen bzw. ein Kontaktdorn sein.

Das Kontaktelement steht in Bewegungsrichtung des Förderwagens betrachtet z. B. seitlich vom Förderwagen ab.

Das Kontaktelement kann ein integraler Teil des Förderwagens bzw. von dessen Grundkörper sein.

Gemäss einer spezifischen Ausführungsform enthält der Förderwagen einen Grundkörper, an welchem Laufrollen oder Gleitelemente zum Abrollen an einer oder zum Gleiten auf einer Führungsschiene befestigt sind. Das Halteorgan ist am Grundkörper angebracht.

Gemäss einer Weiterbildung enthält der Förderwagen einen ersten und zweiten Wagenschenkel sowie einen die beiden Wagenschenkel miteinander verbindenden Verbindungsabschnitt, welche zusammen insbesondere den Grundkörper ausbilden.

An den Wagenschenkeln sind Laufrollen oder Gleitelemente befestigt.

Das Halteorgan ist insbesondere am Verbindungsabschnitt angebracht.

Die beiden Wagenschenkel und der Verbindungsabschnitt schliessen insbesondere einen einseitig offenen Schienenaufnahmeraum zur Aufnahme einer Führungsschiene ein.

Die erfindungsgemässe Fördervorrichtung kann als Hängeförderer ausgebildet sein. Bei einem Hängförderer werden die Stückgüter wenigstens abschnittsweise hängend gefördert.

In der hängenden Förderung ist das Halteorgan mit dem Stückgut bezogen auf die Schwerkraftrichtung unterhalb der Führungsschiene angeordnet.

Die Fördervorrichtung enthält insbesondere eine Steuerungseinrichtung zur Steuerung der Mitnahmeeinrichtung und der Abgabeeinrichtung sowie gegebenenfalls der Übernahmeeinrichtung. Der Mitnehmerantrieb wird über die Steuerungseinrichtung gesteuert.

Die Mitnehmereinrichtung erfüllt gemäss vorliegender Erfindung zwei Aufgaben. Sie bewegt die Förderwagen in definierten Abständen zueinander sowie mit definierter, d.h. kontrollierter Geschwindigkeit zum Abgabebereich hin.

Ferner dient die Mitnehmereinrichtung als Aufstiegshilfe für die Förderwagen von einem tieferen auf ein höheres Potentialniveau im Anschluss an den Abgabebereich.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1:: eine perspektivische Ansicht eines schienengeführten Förderwagens;
- Figur 2:: eine perspektivische Ansicht einer erfindungsgemässen Fördervorrichtung im Bereich der Abgabeeinrichtung
- Figur 3:: eine Seitenansicht der Fördervorrichtung im Bereich der Abgabeeinrichtung gemäss Figur 2;
- Figur 4:: eine Seitenansicht der Fördervorrichtung im Bereich der Abgabeeinrichtung gemäss Figur 3 unter Weglassung eines drehbaren Radschildes des Radmoduls kurz vor der Abgabe eines Stückgutes;
- Figur 5:: eine Seitenansicht der Fördervorrichtung im Bereich der Abgabeeinrichtung gemäss Figur 3 unter Weglassung eines drehbaren Radschildes des Radmoduls kurz nach der Abgabe eines Stückgutes.

Grundsätzlich sind in den Figuren gleiche Teile mit gleichen Bezugszeichen versehen. Das beschriebene Ausführungsbeispiel steht beispielhaft für den Erfindungsgegenstand und hat keine beschränkende Wirkung.

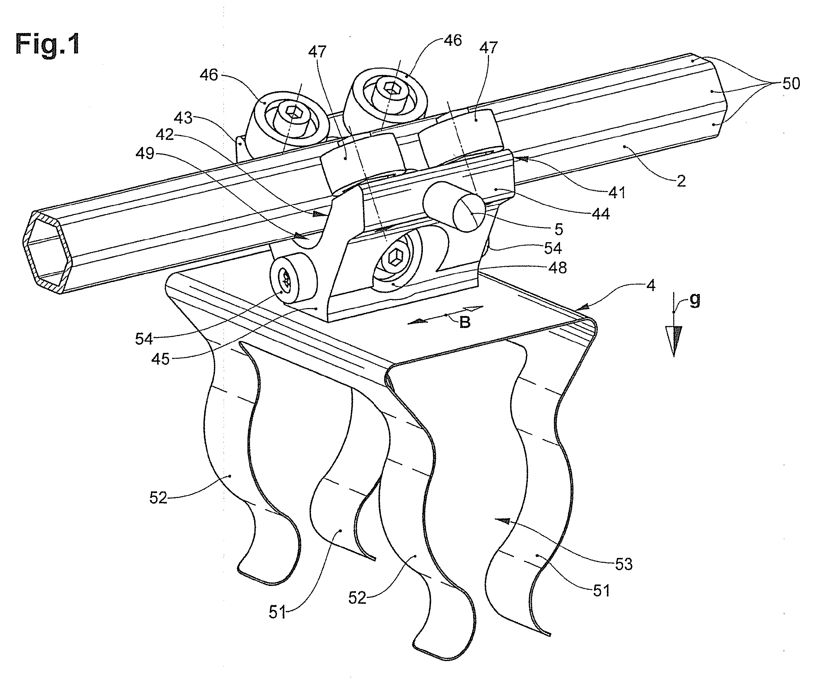

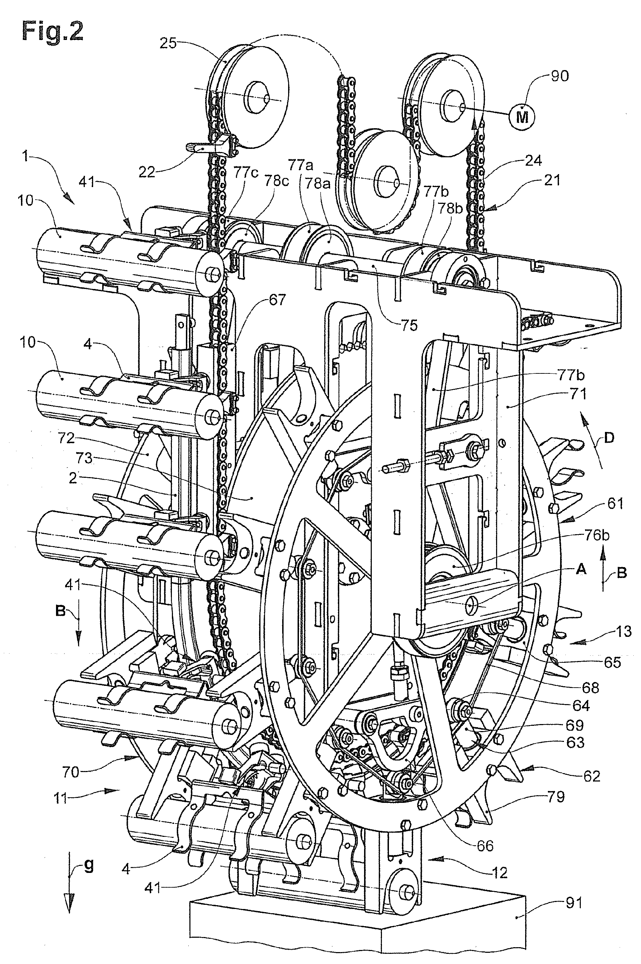

Die Figur 1 zeigt einen auf einer Führungsschiene 2 geführten Förderwagen 41 eines als Schwerkraftförderers ausgeführten Hängeförderers, wie er zum Beispiel in einer erfindungsgemässen Fördervorrichtung 1 gemäss Figur 2 eingesetzt werden kann.

Der Förderwagen 41 ist als Aussenläufer ausgebildet. Das heisst, der Förderwagen 41 ist um die Führungsschiene 2 herum angeordnet. Der Förderwagen 41 weist einen Grundkörper 42 mit einem ersten und zweiten Wagenschenkel 43, 44 auf, welche über einen Verbindungsabschnitt 45 miteinander verbunden sind.

Am Endabschnitt des ersten Wagenschenkels 43 ist ein Paar von ersten Laufrollen 46 drehbar gelagert angeordnet. Am Endabschnitt des zweiten Wagenschenkels 44 ist ein Paar von zweiten Laufrollen 47 drehbar gelagert angeordnet. Die Laufrollen 46, 47 der genannten Laufrollenpaare sind jeweils in Bewegungsrichtung B hintereinander angeordnet. Die paarweise Anordnung von ersten und zweiten Laufrollen 46, 47 soll ein Verkippen des Förderwagens 41 in Bewegungsrichtung B verhindern.

Am Verbindungsabschnitt 45 ist eine einzelne dritte Laufrolle 48 drehbar gelagert angeordnet. Die ersten, zweiten und dritten Laufrollen sind in einem Winkel zueinander angeordnet.

Die beiden Wagenschenkel 43, 44 bilden einen Schienenaufnahmeraum 49 aus, durch welchen die Führungsschiene 2 geführt ist. Die Führungsschiene 2 ist ein symmetrisches Sechskantprofil. Die Profilaussenflächen 50 bilden die Laufflächen für die Laufrollen 46, 47, 48 aus. Die Führungsschiene kann aber allgemein als Mehrkantprofil oder gar als Rundprofil ausgebildet sein.

An Stelle von zwei ersten Laufrollen 46 kann auch nur eine erste Laufrolle vorgesehen sein. An Stelle von zwei zweiten Laufrollen 47 kann auch nur eine zweite Laufrolle vorgesehen sein. An Stelle von einer dritten Laufrollen 48 können auch zwei dritte Laufrollen vorgesehen sein. Beliebige Kombinationen sind möglich. Es können ferner auch mehr als zwei erste, zweite und/oder dritte, hintereinander angeordnete Laufrollen vorgesehen sein.

Aussen am Verbindungsabschnitt 45 ist eine Halteklammer 4 zur Aufnahme und klemmenden Halterung eines Stückgutes angeordnet.

Die Halteklammer 4 ist in einer hängenden Förderung unterhalb der Führungsschiene 2 angeordnet. Die beiden Wagenschenkel 43, 44 sind von unten seitlich der Führungsschiene 2 nach oben geführt.

Die Halteklammer 4 weist ein Paar von ersten Klammerschenkeln 51 und ein Paar von zweiten Klammerschenkeln 52 auf, welche einen Aufnahmeraum 53 für das Stückgut 10 einschliessen.

Die Halteklammer 4 ist aus Federstahl gebildet. Durch Auseinanderspreizen der Klammerschenkeln 51, 52 kann das Stückgut 10 in die Aufnahmeraum 53 ein- oder aus diesem herausgeführt werden. Die federelastischen Klammerschenkeln 51, 52 halten das Stückgut 10 mittels ihrer Rückstellkraft klemmend im Aufnahmeraum 53.

Seitlich am ersten und zweiten Wagenschenkel 43, 44 ist jeweils ein quer zur Bewegungsrichtung B bzw. Längsrichtung der Führungsschiene 2 abstehender Kontaktzapfen 5 zur Herstellung eines Führungskontaktes mit Mitnehmern 22 angeordnet.

Ist der Mitnehmer 22 gegenüber dem Förderwagen 41 in Bewegungsrichtung B vorlaufend angeordnet, so bildet dieser mit dem Kontaktzapfen 5 einen Rückhaltekontakt aus. Ist der Mitnehmer 22 gegenüber dem Förderwagen 41 in Bewegungsrichtung B nachlaufend angeordnet, so bildet dieser mit dem Kontaktzapfen 5 einen Mitnahmekontakt aus (siehe Figur 2).

Der Förderwagen 41 enthält im Weiteren in Bewegungsrichtung B betrachtet auf der Vorder- und Rückseite Anschlagelemente 54, welche Stösse beim Zusammentreffen zweier unabhängig voneinander bewegten Förderwagen 41 dämpft. Die Anschlagelemente 54 sind insbesondere Zapfen aus gummielastischem Material. Die Anschlagelemente 54 können eine dämpfende Wirkung haben.

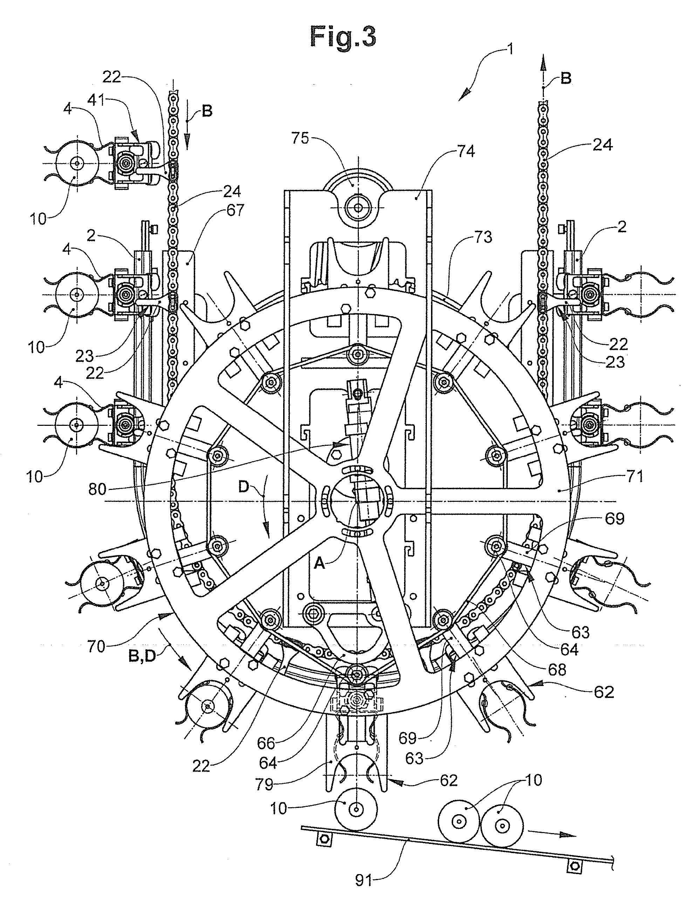

Die Figuren 2 bis 5 zeigen eine erfindungsgemässe Fördervorrichtung 1 im Bereich der Abgabeeinrichtung 61. Die Figur 2 zeigt die Abgabeeinrichtung 61 kurz vor Abgabe eines Stückgutes 10 aus einer perspektivischen Ansicht. Die Figur 3 zeigt dieselbe Abgabeeinrichtung 61 kurz nach der Abgabe eines Stückgutes 10 aus einer Seitenansicht.

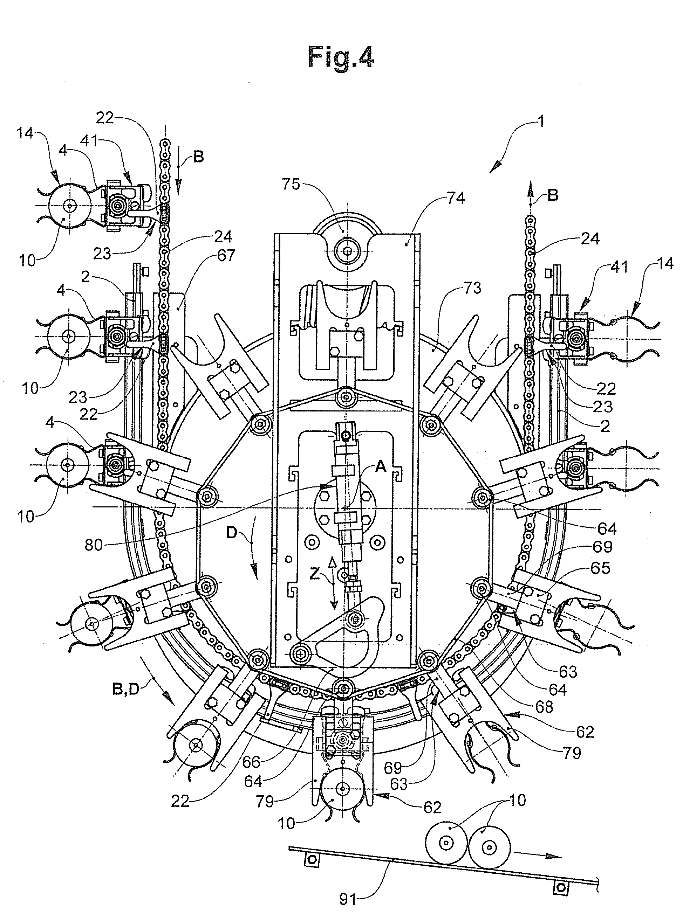

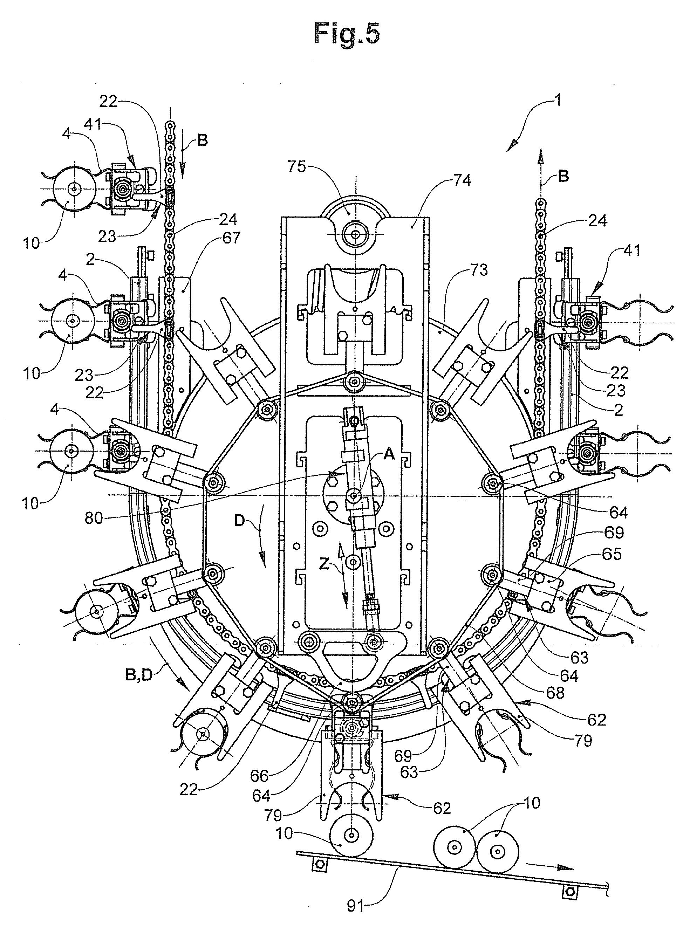

Die Figuren 4 und 5 zeigen dieselbe Abgabeeinrichtung 61 ebenfalls aus einer Seitenansicht jedoch aus darstellerischen Gründen ohne den Radschild 71. Die am Radschild 71 angebrachten Ausstossorgane 62 sind aus Anschauungsgründen jedoch dargestellt. Der Unterschied in der Darstellung zwischen Figur 4 und 5 besteht darin, dass die Figur 4 eine Momentaufnahme kurz vor Abgabe eines Stückgutes 10 und die Figur 5 eine Momentaufnahme kurz nach Abgabe des Stückgutes 10 darstellt.

Die Fördervorrichtung 1 ist ein Schwerkraftförderer mit einer Mehrzahl von entlang einer Führungsschiene 2 über Laufrollen bewegten Förderwagen 41 gemäss Figur 1. Andere Ausführungsformen von Förderwagen 41 und Schienenführungen sind ebenfalls möglich.

Die Fördervorrichtung 1 enthält eine Abgabeeinrichtung 61, welche für die Förderwagen 41 und die Mitnehmer 22 einen Einlauf- 11, Abgabe- 12 und Auslaufbereich 13 ausbildet. Die Führungsschiene 2 verläuft entlang des Einlauf- 11, Abgabe- 12 und Auslaufbereichs 13 durch die Abgabeeinrichtung 61.

Ferner enthält die Fördervorrichtung 1 eine Mitnahmeeinrichtung 21. Die Mitnahmeeinrichtung 21 enthält eine Antriebskette 24, an welcher in gleichmässigen Abständen zueinander Mitnehmer 22 angeordnet sind. Die Mitnehmer 22 enthalten jeweils einen quer zur Antriebskette 24 und zur Bewegungsrichtung B nach aussen abstehenden Mitnehmerfinger 23. Die Antriebskette 24 wird über einen Mitnehmerantrieb 25 angetrieben.

Die Antriebskette 24 ist vor dem Einlaufbereich 11 und im Anschluss an den Auslaufbereich 13 in einer Kettenführung 67 geführt. Die Kettenführung 67 bildet einen offenen Kettenkanal aus, welcher das Ausweichen der Antriebskette 24, aufgrund von Kräften, die von den Mitnehmern 22 auf die Antriebskette 24 übertragen werden verhindern.

Die Abgabeeinrichtung 61 enthält ein um eine geometrische Drehachse A drehbar gelagertes Radmodul 70. Das Radmodul 70 enthält einen ersten und zweiten Radschild 71, 72, welche spiegelbildlich zueinander auf der geometrischen Drehachse A angeordnet sind. Zwischen den beiden Radschilden 71, 72 ist ein Antriebsrad 73 angeordnet, welches ebenfalls um die gemeinsame geometrische Drehachse A drehbar gelagert ist.

Die Antriebskette 24 ist um das Antriebsrad 73 geführt und bildet einen formschlüssigen Kontakt zu diesem aus. Das Antriebsrad 73 wird von der Antriebskette 24 angetrieben. Das Antriebsrad 73 ist im vorliegenden Ausführungsbeispiel als Zahnrad ausgebildet und bildet mit der Antriebskette 24 einen Antriebs-Formschluss aus.

Entlang des Aussenumfanges der Radschilden 71, 72 sind jeweils in gleichmässigen Abständen zueinander, radial ausgerichtete Ausstossorgane 62 angeordnet. Jedes Ausstossorgan 62 umfasst ein Ausstossglied 63 mit einem Führungszylinder 69, welcher in einer Führungsbuchse 65 des Ausstossorgans 62 beweglich geführt ist. Die Führungsbuchse 65 ist bewegungsfest am Radschild 71, 72 befestigt, z. B. über Schraubverbindungen.

Die Teilung der Ausstossorgane 62 am Radschild 71, 72 ist so gewählt, dass beim Zusammenführen von Ausstossorganen mit Mitnehmern 22 bzw. Förderwagen 41 zu Beginn des Einlaufbereichs 11 immer ein Ausstossorgan 62 einem Förderwagen 41 zugeordnet ist und sich diese paarweise synchron zum Abgabebereich 12 hin bewegen.

Die Radschilde 71, 72 und das Antriebsrad 73 sind jeweils starr mit einem Übertragungsrad 76a, 76b, 76c gekoppelt. Die Übertragungsräder 76a, 76b, 76c sind ebenfalls um die geometrische Drehachse A drehbar angeordnet. Die Abgabeeinrichtung 61 enthält im weiteren eine radial ausserhalb des Radmoduls 70 angeordnete Übertragungsachse 75.

Das Übertragungsrad 76a des Antriebsrades 73 wird von einem ersten Antriebsriemen 77a umschlungen. Dieser erste Antriebsriemen 77a wiederum umschlingt ein an der Übertragungsachse 75 angeordnetes und starr mit dieser gekoppeltes erstes Übertragungsrad 78a.

Ein zweites an der Übertragungsachse 75 angeordnetes und starr mit dieser gekoppeltes Übertragungsrad 78b wird jeweils von einem zweiten Antriebsriemen 77b umschlungen. Ein drittes an der Übertragungsachse 75 angeordnetes und starr mit dieser gekoppeltes Übertragungsrad 78c wird jeweils von einem dritten Antriebsriemen 77c umschlungen. Der zweite Antriebsriemen 77b umschlingt im Weiteren das Übertragungsrad 76b am ersten Radschild 71 und der dritte Antriebsriemen 77c umschlingt im Weiteren das Übertragungsrad 76c am zweiten Radschild 72.

Das von der Antriebskette 24 angetriebene Antriebsrad 73 treibt nun seinerseits über den ersten Antriebsriemen 77a die Übertragungsachse 75 und die auf dieser angeordneten Übertragungsräder 76a, 76b, 76c an. Die beiden Radschilde 71, 72 werden über die Antriebsriemen 77b, 77c wiederum von der Übertragungsachse 75 angetrieben. Durch gezielte Wahl der Durchmesser der Übertragungsräder 76, 77 und des Antriebsrades 73 kann ein Übersetzungsverhältnis festgelegt werden, welches gewährleistet, dass die Entlassungsorgane 62 eingangs des Einlaufbereichs 11 jeweils taktsynchron mit einem Mitnehmern 22 zusammentreffen.

Das Ausstossglied 63 enthält ein radial aussen am Führungszylinder 69 angeordnetes Ausstosselement 79 sowie einen radial innen am Führungszylinder angeordnete Steuerrolle 64. Das Ausstosselement 79 weist eine konkave Vertiefung auf, welche an die Umfangsform eines zylindrischen Stückgutes 10 angepasst ist.

Im Abgabebereich 12 ist eine stationäre Steuerkulisse 66 in Form einer Kurvenscheibe angeordnet, entlang welcher die Steuerrolle 64 des Ausstossgliedes 63 eines sich vorbei bewegenden Ausstossorgans 62 abrollt. Die Steuerkulisse 66 ist derart angeordnet, dass das Ausstossglied 63 beim Abrollen der Steuerrolle 64 entlang der Steuerkulisse 66 entgegen einer Rückstellkraft radial nach aussen gestossen wird. Hierbei gleitet das Ausstossglied 63 mit seinem Führungszylinder 69 in der bewegungsfest am Radschild 71, 72 angeordneten Führungsbuchse 65.

Bei diesem Bewegungsvorgang stösst das Ausstosselement 79 gegen das in der Halteklammer 4 des Förderwagens 41 gehaltenen Stückgutes 10 und stösst dieses mit fortschreitender Stossbewegung vollständig aus der Halteklammer 4 aus.

Sobald die Steuerrolle 64 den Einflussbereich der Steuerkulisse 66 verlässt bewegt sich das Ausstossglied 63, bedingt durch eine auf dieses wirkende Rückstellkraft, von der maximalen Ausstossposition wieder zurück in eine Ausgangsposition.

Die Rückstellkraft wird durch einen mitlaufenden, elastischen Rückstellriemen 68 bewirkt, welcher den Ausstossgliedern 63 anliegt. Der Rückstellriemen 68 steht unter Vorspannung, so dass dieser die Steuerrollen 64 und mit diesen die Ausstossglieder 63 zur Drehachse A hin zieht.

Da im vorliegenden Ausführungsbeispiel längliche Stückgüter 10 mit einer quer zur Bewegungsrichtung B ausgerichteten Längsachse gefördert werden, sind zwei identische jedoch spiegelsymmetrisch zueinander, beidseits des Antriebsrades 73 angeordnete Radschilde 71, 72 mit Ausstossorganen 62, elastischem Rückstellriemen 68 und Steuerkulisse 66 vorgesehen.

Die Ausstossorganen 62 der beiden Radschilde 71, 72 sind radial aufeinander ausgerichtet und werden entlang ihrer kreisförmigen Bewegungsbahn zueinander synchron geführt. Ebenso werden die Ausstossglieder 63 der beiden Radschilde 71, 72 synchron zueinander bewegt.

Dadurch wird das längliche Stückgut 10 an zwei voneinander beabstandeten Stellen gleichzeitig durch ein Ausstosselement 79 ausgestossen. Bei der Verwendung von lediglich einem einzelnen Ausstosselement 79 würde die Gefahr der Verkantung des Stückgutes 10 in der Halteklammer 4 bestehen.

Die Steuerkulisse 66 ist über eine Gelenkverbindung schwenkbar an einem stationären Tragkörper 74 der Abgabeeinrichtung 61 befestigt. Der stationäre Tragkörper 74 haltert auch die Drehachse des Radmoduls 70.

Im Weiteren ist ein Stellzylinder 80 am stationären Tragkörper 74 angebracht. Der Stellzylinder 80 ist mit der Steuerungseinrichtung verbunden und wird über diese betätigt. Der Stellzylinder 80 ist über eine Gelenkverbindung gelenkig mit der Steuerkulisse 66 verbunden. Der Stellzylinder 80 ist ein Hydraulik- oder Pneumatikzylinder.

Durch Ausfahren (Vorhub) des Stellzylinders 80 wird die Steuerkulisse 66 mit ihrer Führungsfläche in die Bewegungsbahn der Steuerrolle 64, also in die aktive Position, geschwenkt. Die über die Führungsfläche der Steuerkulisse 66 abrollende Steuerrolle 64 bewirkt einen Ausstosshub des Ausstossgliedes 63 und somit des Ausstosselements 79 (siehe Figur 5).

Durch das Einfahren (Rückhub) des Stellzylinders 80 wird die Steuerkulisse 66 mit ihrer Führungsfläche wenigstens so weit aus der Bewegungsbahn der Steuerrolle 64 geschwenkt, dass diese keinen Ausstosshub des Ausstossgliedes 63 bewirkt. Die Steuerkulisse 66 befindet sich in einer inaktiven Position. Die an der Steuerkulisse 66 vorbei bewegte Steuerrolle 64 leitet entsprechend keinen Ausstosshub des Ausstossgliedes 63 und somit des Ausstosselements 79 ein (siehe Figur 4).

Zwecks Abgabe der Stückgüter 10 rollen die Förderwagen 41 mit den Stückgütern 10 von der Schwerkraft angetrieben und voneinander unabhängig entlang der Führungsschiene 2 in den Einlaufbereich 11 der Abgabeeinrichtung 61 ein. Die Führungsschiene 2 verläuft hierzu entlang eines Gefälles.

Die Förderwagen 41 werden dabei über ihre Kontaktzapfen 5 von vorlaufenden Mitnehmern 22 unter Ausbildung eines Rückhaltekontaktes zurückgehalten und synchron mit den Mitnehmern 22 bewegt.

Die Mitnehmer 22 sind in gleichmässigen Abständen an der Antriebskette 24 angeordneten und bewegen sich entsprechend mit derselben Geschwindigkeit. Die Förderwagen 41 werden entsprechend mit gleichmässigen Abständen und kontrollierter Geschwindigkeit in den Einlaufbereich 11 bewegt.

Die Ausstossorgane 62 werden durch das rotierende Radmodul 70 in den Einlaufbereich 11 hinein bewegt. Die einzelnen Ausstossorgane 62 treffen dabei jeweils taktsynchron mit einem Mitnehmer 22 und folglich mit einem von diesem zurück gehaltenen Förderwagen 41 zusammen. Bei diesem Vorgang übergreift das Ausstosselement 79 mit seiner Ausnehmung das Stückgut 10 und bildet so eine Führung für das Stückgut 10 und daher indirekt auch für den dazugehörigen Förderwagen 41 aus.

Förderwagen 41, Mitnehmer 22, und Ausstossorgane 62 bewegen sich im Einlaufbereich 11, im Abgabebereich 12 und im Auslaufbereich 13 entlang einer gemeinsamen Bewegungsbahn B.

Die Förderwagen 41 werden im Einlaufbereich 11 über die Stückgüter 10 mit der Geschwindigkeit der Ausstossorgane 62 geführt in den Abgabebereich 12 bewegt. Da sich die Mitnehmer 22 schneller als die Ausstossorgane 62 entlang der gemeinsamen Bewegungsbahn B bewegen, bewegen sich die Mitnehmer 22 im Einlaufbereich 11 und darüber hinaus unter Beendigung des Rückhaltekontaktes mit dem nachlaufenden Kontaktzapfen 5 des dazugehörigen Förderwagens 41 in Bewegungsrichtung B vom Förderwagen 41 weg.

Im Abgabebereich 12 wird das Stückgut 10 durch das Ausstosselement 79 des Ausstossorgans 62 radial aus der Halteklammer 4 des Förderwagens 41 ausgestossen. Der Förderwagen 41 befinden sich hier auf dem tiefsten Potentialniveau. Das heisst, der Verlauf der Führungsschiene 2 geht an dieser Stelle von einem Gefälle in eine Steigung über. Die Führungsschiene 2 weist in diesem Bereich einen bogenförmigen Verlauf auf.

Mit dem Ausstossen des Stückgutes 10 aus der Halteklammer 4 wird auch der Führungskontakt mit dem Ausstossorgan 62 aufgehoben. Der Förderwagen 41 verweilt daher im Abgabebereich bis der nachlaufende Mitnehmer 22 den Förderwagen 41 einholt und mit dem vorlaufenden Kontaktzapfen 5 des Förderwagens 41 einen Mitnahmekontakt ausbildet.

Der Förderwagen 41 wird nun im Anschluss an den Abgabebereich 12, das heisst im Auslaufbereich 13, durch den Mitnehmer 22 angetrieben, d.h. mitgenommen, und auf ein höheres Potentialniveau bewegt. Der Förderwagen 41 bewegt sich im Auslaufbereich 13 entsprechend mit der Geschwindigkeit des Mitnehmers 22.

Die Ausstossorgane 62 werden am Ende des Auslaufbereichs 13 aus dem Auslaufbereich 13 heraus wieder zum Einlaufbereich 11 hin bewegt. Dabei bewegen sich die Ausstossorgane 62 unter Aufhebung des Führungskontaktes von den Förderwagen 41 weg.

Wird nun ein Stückgut 10 im Abgabebereich nicht abgegeben, so wird der Führungswagen 41 im Auslaufbereich 13 unter Beibehaltung des Führungskontaktes weiterhin über das Ausstossorgan 62 angetrieben. Der Führungswagen 41 bewegt sich im Auslaufbereich folglich mit der Geschwindigkeit des Ausstossorgans 62.

Die Geschwindigkeiten des Ausstossorgans 62 und des nachlaufenden Mitnehmers 22 sind nun so aufeinander abgestimmt, dass der Mitnehmer den Förderwagen 41 einholt und mit diesem einen Mitnahmekontakt ausbildet, wenn das Ausstossorgan 62 den Auslaufbereich 13 verlässt und sich folglich unter Aufhebung des Führungskontaktes vom Förderwagen 41 entfernt.

## Patentansprüche

1. Fördervorrichtung (1) enthaltend:
- eine Mehrzahl von unabhängig voneinander, entlang einer Bewegungsbahn bewegbaren Förderwagen (41) zum Fördern von Stückgütern (10),
mit Kontaktelementen (5) zur Herstellung eines Führungskontaktes mit Mitnehmern (22) und mit Halteorganen (4) zum Halten der Stückgüter (10); weiter enthaltend
- eine Mitnahmeeinrichtung (21) mit einer Mehrzahl von, mittels eines Mitnehmerantriebs (25) entlang einer Bewegungsbahn bewegbaren Mitnehmern (22);
und die Fördervorrichtung (1) derart ausgestaltet ist, dass die Bewegungsbahn der Förderwagen (41) und der Mitnehmer (22) zum Einlaufbereich (11) hin entlang eines Gefälles verläuft, derart, dass die Förderwagen (41) über ihre Kontaktelemente (5) von vorlaufenden Mitnehmer (22) unter Ausbildung eines Rückhaltekontaktes zurückgehalten und synchron mit den Mitnehmern (22) in Richtung eines Abgabebereichs (12) bewegt werden können; und
die Bewegungsbahn der Förderwagen (41) und der Mitnehmer (22) im Auslaufbereich (13) entlang einer Steigung verläuft, derart, dass die Förderwagen (41) über ihre Kontaktelemente (5) von nachlaufenden Mitnehmern (22) unter Ausbildung eines Mitnahmekontaktes vom Abgabebereich (13) weg bewegt werden können,
**dadurch gekennzeichnet, dass**
die Fördervorrichtung (1) eine Abgabeeinrichtung (61) zur Abgabe von Stückgütern (10) von den Förderwagen (41) an eine Übernahmeeinrichtung (91) mit einer Mehrzahl entlang einer geschlossenen Bewegungsbahn bewegbaren Entlassungsorganen (62) zum Entlassen der Stückgüter (10) aus den Halteorganen (4) im Abgabebereich (12) enthält,
und die Abgabeeinrichtung (61) in Bewegungsrichtung (B) einen Einlaufbereich (11), den Abgabebereich (12) und einen Auslaufbereich (13) ausbildet.

2. Fördervorrichtung gemäss Anspruch 1, **dadurch gekennzeichnet, dass** die Halteorgane (4) Klammern sind.

3. Fördervorrichtung gemäss Anspruch 1, **dadurch gekennzeichnet, dass** die Entlassungsorgane (62) Ausstossorgane zum Ausstossen der Stückgüter (10) aus den Halteorganen (4) sind.

4. Fördervorrichtung gemäss Anspruch 1, **dadurch gekennzeichnet, dass** das Entlassungsorgan (62) einen Kontaktkörper (79) ausbildet, zur Herstellung eines Führungskontaktes mit einem Förderwagen (41) oder einem von diesem gehaltenen Stückgut (10) im Einlaufbereich (11) zur synchron mit dem Entlassungsorgan (62) geführten Bewegung des Förderwagens (41) in den Abgabebereich (13).

5. Fördervorrichtung gemäss Anspruch 1 oder 4, **dadurch gekennzeichnet, dass** die Abgabeeinrichtung (61) Antriebsmittel (73, 75, 76, 77, 78) zum Antreiben der Entlassungsorgane (62) entlang der Bewegungsbahn enthält, und die Antriebsmittel (73, 75, 76, 77, 78) insbesondere mit dem Mitnehmerantrieb (25) gekoppelt sind.

6. Fördervorrichtung gemäss einem der Ansprüche 1 und 4 bis 6, **dadurch gekennzeichnet, dass** das Entlassungsorgan (62) ein über eine stationäre Steuerkulisse (66) aktivierbares Entlassungsglied (63) enthält.

7. Fördervorrichtung gemäss einem der Ansprüche 1 bis 6, **dadurch gekennzeichnet, dass** die Mitnahmeeinrichtung (21) ein durch den Mitnehmerantrieb (25) umlaufend angetriebenes, flexibles Antriebsorgan (24) enthält, an welchem die Mitnehmer (22) angebracht sind.

8. Fördervorrichtung gemäss einem der Ansprüche 1 bis 7, **dadurch gekennzeichnet, dass** die Bewegungsbahn der Förderwagen (41) im Bereich der Abgabeeinrichtung (61) eine Kurvenbahn ist und in Bewegungsrichtung der Förderwagen (41) von einem höheren Potentialniveau im Einlaufbereich (11) auf ein tieferes Potentialniveau im Abgabebereich (12) und vom tieferen Potentialniveau im Abgabebereich (12) auf ein höheres Potentialniveau im Auslaufbereich (13) führt.

9. Fördervorrichtung gemäss einem der Ansprüche 1 bis 8, **dadurch gekennzeichnet, dass** die Kontaktelemente (5) jeweils eine erste Kontaktzone zur Herstellung eines Rückhaltekontaktes mit einem vorlaufenden Mitnehmer (22) und eine zweite Kontaktzone zur Herstellung eines Mitnahmekontaktes mit einem nachlaufenden Mitnehmer (22) ausbilden.

10. Abgabeeinrichtung (61) für eine Fördervorrichtung (1) gemäss den Ansprüchen 1 bis 9, **dadurch gekennzeichnet, dass** die Abgabeeinrichtung (61) ein um eine Drehachse (A) antreibbares Entlassungsradmodul (71, 72) enthält, an welchem Entlassungsorgane (62) angeordnet sind.

11. Verfahren zum Bearbeiten von Stückgütern (10) in einer Fördervorrichtung (1) mittels einer Fördervorrichtung (1) gemäss den Ansprüchen 1 bis 10, **dadurch gekennzeichnet, dass**:
- Mitnehmer (22) und Förderwagen (41) mit Stückgütern (10) entlang einer gleich verlaufenden Bewegungsbahn (B) in den Einlaufbereich (11) einer Abgabeeinrichtung (61) bewegt werden, wobei die Mitnehmer (22) nachlaufende Förderwagen (41) unter Ausbildung eines Rückhaltekontaktes mit der Mitnehmergeschwindigkeit geführt in den Einlaufbereich (11) bewegen;
- die Mitnehmer (22) sich im Einlaufbereich (11) und/oder im Abgabebereich unter Aufhebung des Rückhaltekontaktes von den nachlaufenden Förderwagen (41) weg bewegen;
- die Entlassungsorgane (62) entlang der geschlossenen Bewegungsbahn bewegt werden,
- und die Stückgüter (10) im Anschluss an den Einlaufbereich (11), im Abgabebereich (12) der Abgabeeinrichtung (61) durch die Entlassungsorgane (62) aus den Halteorganen (4) entlassen und so von den Förderwagen (41) an die Übernahmeeinrichtung (91) abgegeben werden;
- die Mitnehmer (22) sich unter Ausbildung eines Mitnahmekontaktes jeweils zu den vorlaufender Förderwagen (41) hin bewegen;
- im Anschluss an den Abgabebereich (12) die Förderwagen (41) über den Mitnahmekontakt durch die Mitnehmer (22) mit Mitnehmergeschwindigkeit geführt weiterbewegt werden.

12. Verfahren gemäss Anspruch 11, **dadurch gekennzeichnet, dass** die Förderwagen (41) in der Abgabeeinrichtung (61) entlang einer Bewegungsbahn mittels Schwerkraft von einem höheren Potentialniveau im Einlaufbereich (11) auf ein tieferes Potentialniveau im Abgabebereich (12) und durch die Mitnehmer (22) vom tieferen Potentialniveau im Abgabebereich (12) auf ein höheres Potentialniveau im Anschluss an den Abgabebereich (12) bewegt werden.

13. Verfahren gemäss Anspruch 12, **dadurch gekennzeichnet, dass**:
- Mitnehmer (22) nachlaufende Förderwagen (41) unter Ausbildung eines Rückhaltekontaktes mit Mitnehmergeschwindigkeit geführt in den Einlaufbereich (11) bewegen;
- die Förderwagen (41) im Einlaufbereich (11) unter Ausbildung eines Führungskontaktes mit Entlassungsorganen (62) zusammengeführt werden;
- die Entlassungsorgane (62) die Förderwagen (41) über den Führungskontakt mit der Geschwindigkeit der Entlassungsorgane (62) geführt in den Abgabebereich (12) bewegen;
- die Mitnehmer (22) sich schneller bewegen als die Entlassungsorgane (62), so dass sich die Mitnehmer (22) im Einlaufbereich (11) unter Beendigung des Rückhaltekontaktes in Bewegungsrichtung (B) jeweils vom nachlaufenden Förderwagen (41) weg bewegen;
- im Anschluss an den Einlaufbereich (11), in einem Abgabebereich (12) der Abgabeeinrichtung (61) Stückgüter (10) von Förderwagen (41) an eine Übernahmeeinrichtung (91) abgegeben werden;
- die Mitnehmer (22) sich unter Ausbildung eines Mitnahmekontaktes jeweils zum vorlaufenden Förderwagen (41) hin bewegen;
- die Förderwagen (41) im Anschluss an den Abgabebereich (12) über den Mitnahmekontakt durch die Mitnehmer (22) mit Mitnehmergeschwindigkeit geführt weiterbewegt werden.

14. Verfahren gemäss Anspruch 12 oder 13, **dadurch gekennzeichnet, dass** sich die Entlassungsorgane (62), die Förderwagen (41) und die Mitnehmer (22) im Einlaufbereich (11), im Abgabebereich (12) und im Auslaufbereich (13) entlang einer gleich verlaufenden Bewegungsbahn (B) bewegen.

## Claims

1. Conveying apparatus (1) including:
- a plurality of conveying vehicles (41) which can be moved along a movement path independently of one another for conveying piece goods (10),
having contact elements (5) for producing a guiding contact with entrainment means (22) and with holding bodies (4) for holding the piece goods (10); further comprising
- an entraining device (21) with a plurality of entrainment means (22) which can be moved along a movement path by means of an entraining drive (25);
and the conveying apparatus (1) is designed in such a manner that the movement path of the conveying vehicles (41) and of the entrainment means (22) toward the inlet region (11) extends along a descent in such a manner that, by means of their contact elements (5), the conveying vehicles (41) can be held back (22) from preceding entrainment means (22) whilst forming a holding-back contact and can be moved in the direction of a discharging region (12) in a synchronous manner with the entrainment means (22); and
the movement path of the conveying vehicles (41) and of the entrainment means (22) in the outlet region (13) extends along an ascent in such a manner that, by means of their contact elements (5), the conveying vehicles (41) can be moved away from following entrainment means (22) from the discharging region (12) whilst forming an entraining contact,
**characterized in that**
that the conveying apparatus (1) comprises discharging device (61) for discharging piece goods (10) from the conveying vehicles (41) to a receiving device (91) with a plurality of releasing bodies (62) which can be moved along a closed movement path for releasing the piece goods (10) out of the holding bodies (4) in the discharging region (12),
and in the direction of movement (B) the discharging device (61) realizes an inlet region (11), a discharging region (12) and an outlet region (13).

2. Conveying apparatus according to Claim 1, **characterized in that** the holding bodies (4) are clips.

3. Conveying apparatus according to Claim 1, **characterized in that** the releasing bodies (62) are ejecting bodies for ejecting the piece goods (10) out of the holding bodies (4).

4. Conveying apparatus according to Claim 1, **characterized in that** the releasing body (62) realizes a contact body (79) for producing a guiding contact with a conveying vehicle (41) or with an item of the piece goods (10) which is held by said conveying vehicle (41) in the inlet region (11) for moving the conveying vehicle (41) into the discharging region (12) in a manner guided synchronously with the releasing body (62).

5. Conveying apparatus according to Claim 1 or 4, **characterized in that** the discharging device (61) includes driving means (73, 75, 76, 77, 78) for driving the releasing bodies (62) along the movement path, and the driving means (73, 75, 76, 77, 78) are coupled in particular with the entraining drive (25).

6. Conveying apparatus according to one of Claims 1 and 4 to 6, **characterized in that** the releasing body (62) includes a releasing member (63) which is activatable by means of a stationary control linkage (66).

7. Conveying apparatus according to one of Claims 1 to 6, **characterized in that** the entraining device (21) includes a flexible driving element (24), which is driven in a rotating manner by the entraining drive (25) and on which the entrainment means (22) are mounted.

8. Conveying apparatus according to one of Claims 1 to 7, **characterized in that** the movement path of the conveying vehicles (41) is a curved path in the region of the discharging device (61) and in the direction of movement of the conveying vehicles (41) leads from a higher potential level in the inlet region (11) to a lower potential level in the discharging region (12) and from the lower potential level in the discharging region (12) to a higher potential level in the outlet region (13).

9. Conveying apparatus according to one of Claims 1 to 8, **characterized in that** the contact elements (5) in each case realize a first contact zone for producing a holding-back contact with a preceding entrainment means (22) and a second contact zone for producing an entraining contact with a following entrainment means (22).

10. Discharging device (61) for a conveying apparatus (1) according to claims 1 to 9, **characterized in that** the discharging device (61) includes a releasing wheel module (71, 72) which is drivable about a rotational axis (A) and on which releasing bodies (62) are arranged.

11. Method for processing piece goods (10) in a conveying apparatus (1) by means of a conveying apparatus (1) according to Claims 1 to 10, **characterized in that**:
- entrainment means (22) and conveying vehicles (41) with piece goods (10) are moved along an identically extending movement path (B) into the inlet region (11) of a discharging device (61), wherein the entrainment means (22) move following conveying vehicles (41) in a guided manner into the inlet region (11) at the speed of the entrainment means (22) whilst forming a holding-back contact;
- the entrainment means (22) move away from the following conveying vehicles (41) in the inlet region (11) and/or in the discharging region (12) whilst cancelling the holding-back contact;
- the releasing bodies (62) are moved along the closed movement path;
- and following the inlet region (11) the piece goods (10) in the discharging region (12) of the discharging device (61) are released out of the holding bodies (4) by the releasing bodies (62) and thus are discharged from the conveying vehicles (41) to the receiving device (91);
- the entrainment means (22) move in each case toward the preceding conveying vehicles (41) whilst forming an entraining contact;
- following the discharging region (12), the conveying vehicles (41) are forwarded in a guided manner by the entrainment means (22) at the speed of the entrainment means (22) by means of the entraining contact.

12. Method according to Claim 11, **characterized in that** the conveying vehicles (41) are moved in the discharging device (61) along a movement path by means of the force of gravity from a higher potential level in the inlet region (11) to a lower potential level in the discharging region (12) and by means of the entrainment means (22) from the lower potential level in the discharging region (12) to a higher potential level following the discharging region (12).

13. Method according to Claim 12, **characterized in that**:
- conveying vehicles (41) move following entrainment means (22) into the inlet region (11) in a guided manner at the speed of the entrainment means (22) whilst forming a holding-back contact;
- the conveying vehicles (41) are brought together in the inlet region (11) whilst forming a guiding contact with releasing bodies (62);
- the releasing bodies (62) move the conveying vehicles (41) into the discharging region (12) in a guided manner at the speed of the releasing bodies (62) by means of the guiding contact;
- the entrainment means (22) are moved more rapidly than the releasing bodies (62) such that in the inlet region (11) the entrainment means (22) are moved in the direction of movement (B) in each case away from the following conveying vehicle (41) whilst terminating the holding-back contact;
- following the inlet region (11), piece goods (10) are discharged from conveying vehicles (41) to a receiving device (91) in a discharging region (12) of the discharging device (61);
- the entrainment means (22) are moved in each case toward the preceding conveying vehicle (41) whilst forming an entraining contact;
- following the discharging region (12), the conveying vehicles (41) are forwarded in a guided manner by means of the entrainment means (22) at the speed of the entrainment means (22) by means of the entraining contact.

14. Method according to Claim 12 or 13, **characterized in that** the releasing bodies (62), the conveying vehicles (41) and the entrainment means (22) are moved along an identically extending movement path (B) in the inlet region (11), in the discharging region (12) and in the outlet region (13).

## Revendications

1. Dispositif de transport (1) contenant :
- une pluralité de chariots de transport (41) déplaçables le long d'un trajet de mouvement, indépendamment les uns des autres pour transporter des articles individuels (10),
avec des éléments de contact (5) pour produire un contact de guidage avec des éléments d'entraînement (22) et avec des organes de retenue (4) pour retenir les articles individuels (10) ; contenant en outre
- un dispositif d'entraînement (21) avec une pluralité d'éléments d'entraînement (22) déplaçables le long d'un trajet de mouvement au moyen d'un entraînement à éléments d'entraînement (25),
et le dispositif de transport (1) est conçu de telle sorte que le trajet de mouvement des chariots de transport (41) et des éléments d'entraînement (22) vers la zone d'entrée (11) s'étende le long d'une inclinaison, de telle sorte que les chariots de transport (41) puissent être retenus par l'intermédiaire de leurs éléments de contact (5) à par des éléments d'entraînement (22) antérieurs en formant un contact de retenue et puissent être déplacés de manière synchronisée avec les éléments d'entraînement (22) dans la direction d'une zone de remise (12) ; et le trajet de mouvement des chariots de transport (41) et des éléments d'entraînement (22) s'étend dans la zone de sortie (13) le long d'une élévation, de telle sorte que les chariots de transport (41) puissent être éloignés par l'intermédiaire de leurs éléments de contact (5) par des éléments d'entraînement postérieurs (22) en formant un contact d'entraînement par la zone de remise (12),
**caractérisé en ce que**
le dispositif de transport (1) contient un dispositif de remise (61) pour remettre des articles individuels (10) des chariots de transport (41) à un dispositif de prise en charge (91) doté d'une pluralité d'organes de déchargement (62) déplaçables le long d'un trajet de mouvement fermé afin de décharger les articles individuels (10) hors des organes de retenue (4) dans la zone de remise (12),
et le dispositif de remise (61) constitue dans la direction de mouvement (B) une zone d'entrée (11), la zone de remise (12) et une zone de sortie (13).

2. Dispositif de transport selon la revendication 1, **caractérisé en ce que** les organes de retenue (4) sont des agrafes.

3. Dispositif de transport selon la revendication 1, **caractérisé en ce que** les organes de déchargement (62) sont des organes d'éjection pour éjecter les articles individuels (10) hors des organes de retenue (4).

4. Dispositif de transport selon la revendication 1, **caractérisé en ce que** l'organe de déchargement (62) constitue un corps de contact (79), pour produire un contact de guidage avec un chariot de transport (41) ou un article individuel (10) retenu par celui-ci dans la zone d'entrée (11) en vue d'un mouvement guidé de manière synchrone avec l'organe de déchargement (62) du chariot de transport (41) dans la zone de remise (12).

5. Dispositif de transport selon la revendication 1 ou 4, **caractérisé en ce que** le dispositif de remise (61) contient des moyens d'entraînement (73,75,76,77,78) pour entraîner les organes de déchargement (62) le long du trajet de mouvement et les moyens d'entraînement (73,75,76,77,78) sont couplés notamment avec l'entraînement à élément d'entraînement (25).

6. Dispositif de transport selon une des revendications 1 et 4 à 6, **caractérisé en ce que** l'organe de déchargement (62) contient un organe de déchargement (63) activable par l'intermédiaire d'une coulisse de commande stationnaire (66).

7. Dispositif de transport selon une des revendications 1 à 6, **caractérisé en ce que** le dispositif d'entraînement (21) contient un organe d'entraînement flexible (24), entraîné de manière circonférentielle par l'entraînement à éléments d'entraînement (25), sur lequel sont montés les éléments d'entraînement (22).

8. Dispositif de transport selon une des revendications 1 à 7, **caractérisé en ce que** le trajet de mouvement des chariots de transport (41) dans la zone du dispositif de remise (61) est un trajet incurvé et conduit dans la direction de mouvement des chariots de transport (41) d'un niveau de potentiel plus haut dans la zone d'entrée (11) à un niveau de potentiel plus bas dans la zone de remise (12) et du niveau de potentiel plus bas dans la zone de remise (12) à un niveau de potentiel plus haut dans la zone de sortie (13).

9. Dispositif de transport selon une des revendications 1 à 8, **caractérisé en ce que** les éléments de contact (5) réalisent respectivement une première zone de contact pour produire un contact de retenue avec un élément d'entraînement antérieur (22) et une deuxième zone de contact pour produire un contact d'entraînement avec un élément d'entraînement postérieur (22).

10. Dispositif de remise (61) pour un dispositif de transport (1) selon les revendications 1 à 9, **caractérisé en ce que** le dispositif de remise (61) contient un module de roue de déchargement (71,72) pouvant être entraîné autour d'un axe de rotation (A), sur lequel des organes de déchargement (62) sont disposés.

11. Procédé de traitement d'articles individuels (10) dans un dispositif de transport (1) au moyen d'un dispositif de transport (1) selon les revendications 1 à 10, **caractérisé en ce que** :
- des éléments d'entraînement (22) et des chariots de transport (41) avec des articles individuels (10) sont déplacés le long d'un trajet de mouvement (B) s'étendant de manière identique dans la zone d'entrée (11) d'un dispositif de remise (61), dans lequel les éléments d'entraînement (22) déplacent dans la zone d'entrée (11) des chariots de transport postérieurs (41) en formant un contact de retenue en étant guidés à la vitesse des élément d'entraînement ;
- les éléments d'entraînement (22) s'éloignent des chariots de transport (41) postérieurs dans la zone d'entrée (11) et/ou la zone de remise en annulant le contact de retenue ;
- les organes de déchargement (62) sont déplacés le long du trajet de mouvement fermé ;
- et les articles individuels (10) sont déchargés après la zone d'entrée (11), dans la zone de remise (12) du dispositif de remise (61) par les organes de déchargement (62) hors des organes de retenue (4) et sont remis par les chariots de transport (41) au dispositif de prise en charge (91) ;
- les éléments d'entraînement (22) se déplacent en réalisant un contact d'entraînement respectivement vers les chariots de transport antérieurs (41) ;
- après la zone de remise (12), les chariots de transport (41) poursuivent leur déplacement par l'intermédiaire du contact d'entraînement en étant guidés par les éléments d'entraînement (22) à la vitesse des éléments d'entraînement.

12. Procédé selon la revendication 11, **caractérisé en ce que** les chariots de transport (41) dans le dispositif de remise (61) sont déplacés le long d'un trajet de mouvement au moyen de la force de gravité d'un niveau de potentiel plus haut dans la zone d'entrée (11) à un niveau de potentiel plus bas dans la zone de remise (12) et par les éléments d'entraînement (22) d'un niveau de potentiel plus bas dans la zone de remise (12) à un niveau de potentiel plus haut après la zone de remise (12).

13. Procédé selon la revendication 12, **caractérisé en ce que** :
- des éléments d'entraînement (22) déplacent dans la zone d'entrée (11) des chariots de transport postérieurs (41) en formant un contact de retenue en étant guidés à la vitesse des éléments d'entraînement ;
- les chariots de transport (41) dans la zone d'entrée (11) sont assemblés en réalisant un contact de guidage avec les organes de déchargement (62) ;
- les organes de déchargement (62) déplacent dans la zone de remise (12) les chariots de transport (41) par l'intermédiaire du contact de guidage à la vitesse des organes de déchargement (62) en étant guidés ;
- les éléments d'entraînement (22) se déplacent plus rapidement que les organes de déchargement (62), de sorte que les éléments d'entraînement (22) dans la zone d'entrée (11) s'éloignent respectivement des chariots de transport postérieurs (41) lorsque prend fin le contact de retenue dans la direction de mouvement (B) ;
- après la zone d'entrée (11), dans une zone de remise (12) du dispositif de remise (61), les articles individuels (10) sont remis des chariots de transport (41) à un dispositif de prise en charge (91),
- les éléments d'entraînement (22) se déplacent respectivement vers le chariot de transport antérieur (41) en réalisant un contact d'entraînement ;
- les chariots de transport (41), après la zone de remise (12), poursuivent leur déplacement par l'intermédiaire du contact d'entraînement en étant guidés par les éléments d'entraînement (22) à la vitesse des éléments d'entraînement.

14. Procédé selon la revendication 12 ou 13, **caractérisé en ce que** les organes de déchargement (62), les chariots de transport (41) et les éléments d'entraînement (22) dans la zone d'entrée (11), dans la zone de remise (12) et dans la zone de sortie (13) se déplacent le long d'un trajet de mouvement (B) s'étendant de manière identique.
